# EUROPÄISCHE PATENTSCHRIFT

(11) **EP 3 527 977 B1**
(45) Veröffentlichungstag und Bekanntmachung des Hinweises auf die Patenterteilung: **14.12.2022**
(21) Anmeldenummer: 19153763.8
(22) Anmeldetag: 25.01.2019
(51) Int. Cl.: G01N 29/04, G01M 13/045, G01N 29/22, G01N 29/26, G01N 29/28, B06B 1/06

(54) **ULTRASCHALLPRÜFVORRICHTUNG UND VERFAHREN ZUR HERSTELLUNG EINES ULTRASCHALLPRÜFKOPFS FÜR EINE DERARTIGE ULTRASCHALLPRÜFVORRICHTUNG**
ULTRASONIC TESTING DEVICE AND METHOD FOR PRODUCING AN ULTRASONIC TESTING HEAD FOR SUCH A DEVICE
DISPOSITIF DE CONTRÔLE PAR ULTRASONS ET PROCÉDÉ DE FABRICATION D'UNE SONDE ULTRASONIQUE POUR UN TEL APPAREIL DE CONTRÔLE PAR ULTRASONS

(30) Priorität: 14.02.2018 DE 102018103258
(43) Veröffentlichungstag der Anmeldung: 21.08.2019
(73) Patentinhaber: Framatome GmbH, 91052 Erlangen (DE)
(72) Erfinder: FARTELY, Christian Tobias, 91052 Erlangen (DE)
(74) Vertreter: Lavoix

(56) Entgegenhaltungen:
- EP-A1- 0 452 516
- DE-A1- 3 149 933
- DE-A1- 10 018 355
- DE-A1-102011 076 224
- JP-A- H 085 615
- JP-A- S57 157 154
- US-A- 5 747 672
- US-A1- 2007 175 282
- US-A1- 2010 275 692
- US-A1- 2011 025 172
- US-A1- 2016 126 445
- US-A1- 2017 055 948

## Beschreibung

Die Erfindung betrifft eine Ultraschallprüfvorrichtung mit einem Ultraschallprüfkopf zum Prüfen einer inneren Komponente eines Großwälzlagers und ferner ein Verfahren zur Herstellung eines Ultraschallprüfkopfs für eine derartige Ultraschallprüfvorrichtung.

Vorrichtungen zur Ultraschallprüfung sind aus dem Stand der Technik in unterschiedlichen Anwendungsgebieten hinlänglich bekannt.

So ist beispielsweise aus der WO 2014/202752 A1 eine Vorrichtung mit einem Prüfkopf bekannt, der zum Prüfen einer inneren Komponente eines Großwälzlagers seitlich in das Großwälzlager eingeführt wird. Derartige Großwälzlager können insbesondere dazu vorgesehen sein, rotierende Baugruppen einer Windkraftanlage zu lagern, beispielsweise Rotoren oder Maschinengondeln.

Außerdem zeigt die US 2010/0275692 A1 eine Phased-Array Ultraschallprüfvorrichtung mit einer Vielzahl von Ultraschallwandlern, die in zwei Reihen angeordnet sind. Diese Vorrichtung wird beispielsweise verwendet, um die Dicke von Materialien zu messen.

In der DE 10 2011 076 224 A1 ist eine mehrteilige Befestigungsvorrichtung für einen Ultraschallwandler offenbart, wobei ein Teil der Befestigungsvorrichtung aus einer ausgehärteten Vergussmasse gebildet wird.

Aus der US 2007/0175282 A1 ist eine Ultraschallprüfvorrichtung bekannt, die zum Einkoppeln der Ultraschallwellen in ein Testobjekt eine dünne Flüssigkeitsschicht verwendet.

Weiterhin ist in der DE 31 49 933 A1 eine magnetische Befestigungsvorrichtung für eine Ultraschallprüfvorrichtung gezeigt.

Die US 2016/0126445 A1 zeigt eine Ultraschallprüfvorrichtung mit einer Verarbeitungseinheit und einem Ultraschallprüfkopf. Der Ultraschallprüfkopf umfasst ein Gehäuse mit einer Öffnung, in die ein Ultraschallgerät auf einer Leiterplatte eingesetzt ist.

Aus der DE 100 18 355 A1 ist ein Ultraschallwandler bekannt, der ein Gehäuse und mehrere Wandlerelemente aufweist. Die Wandlerelemente werden dabei durch Leiterbahnen einer Leiterbahnfolie gebildet, wobei die Leiterbahnfolie zwischen einem Dämpfungskörper und einer Piezokeramik auf die Piezokeramik aufgeklebt oder durch mechanisches Anpressen angebracht ist.

Ferner zeigt die US 2011/0025172 A1 einen Ultraschallwandler, dessen Struktur in vier Bereiche aufgeteilt ist. Der Ultraschallwandler hat eine Trägerschicht, die ein Trägermaterial als Schallabsorber aufweist, eine flexible Leiterplatte, einen piezoelektrischen Bereich mit mehreren piezoelektrischen Elementen und einen Anpassungsbereich.Schließlich zeigt die US 2017/0055948 A1 eine Prüfkopfbaugruppe mit einer modularen Vorrichtung, die dazu ausgebildet ist, externe Signale zu erkennen und Energie abzustrahlen.

Da der Prüfkopf zur Prüfung lediglich temporär in das Großwälzlager eingeführt wird, kann auf permanent in dem Großwälzlager verbaute Komponenten zur zerstörungsfreien Werkstückprüfung verzichtet werden, beispielsweise auf Ultraschallsensoren oder Wirbelstromsensoren. Allerdings ist der zum Einführen bzw. Einsetzen des Prüfkopfs in das Großwälzlager zur Verfügung stehende Bauraum typischerweise sehr begrenzt. Die Durchführung der Prüfung, insbesondere der Ultraschallprüfung, an der inneren Komponente des Wälzlagers, wie etwa an einem Wälzkörper oder einer Lauffläche, erfordert somit eine fortgeschrittene Miniaturisierung des einzuführenden Prüfkopfs.

Die Aufgabe der vorliegenden Erfindung besteht darin, eine Ultraschallprüfvorrichtung mit einem kompakten Ultraschallprüfkopf anzugeben, der dazu ausgelegt ist, seitlich in ein Großwälzlager derart eingeführt zu werden, sodass dieser zum Prüfen an eine innere Komponente des Großwälzlagers angelegt werden kann.

Hinsichtlich der Vorrichtung wird diese Aufgabe durch eine Ultraschallprüfvorrichtung gemäß Anspruch 1 gelöst.

Hinsichtlich des Herstellungsverfahrens wird diese Aufgabe durch ein Verfahren mit den Merkmalen des Anspruchs 11 gelöst.

Vorteilhafte Ausgestaltungen der Erfindung sind Gegenstand der abhängigen Ansprüche.

Eine Ultraschallprüfvorrichtung mit einem Ultraschallprüfkopf zum Prüfen einer inneren Komponente eines Großwälzlagers weist ein zum Einführen in ein Großwälzlager ausgebildetes starres Gehäuse auf. Das Gehäuse umfasst eine Einkoppelfläche, eine der Einkoppelfläche gegenüberliegende Deckelfläche und senkrecht zur Einkoppelfläche und zur Deckelfläche verlaufende, erste und zweite Seitenflächen. Die ersten und zweiten Seitenflächen haben jeweils die gleiche, die Bauhöhe des Gehäuses bestimmende vertikale Ausdehnung und verlaufen quer zueinander. An der Einkoppelfläche sind eine Vielzahl von Ultraschallwandlern zum Einkoppeln von Ultraschallwellen in die zu prüfende Komponente angebracht, die in zumindest einer linearen Reihe angeordnet sind, die parallel zur lateralen Ausdehnung der ersten Seitenflächen verläuft. Dabei sind die Ultraschallwandler innerhalb des Gehäuses mittels einer akustisch dämpfenden und ausgehärteten Suspension vergossen. Jeder Ultraschallwandler ist über innerhalb eines Gehäuses des Ultraschallprüfkopfs verlaufende Kontaktdrähte kontaktiert, die im Wesentlichen in einer Ebene parallel zur Einkoppelfläche verlaufen und mit Kabeln verbunden sind, die an einer der zweiten Seitenflächen angekoppelt sind.

Unter der "lateralen Ausdehnung einer Seitenfläche" wird erfindungsgemäß die Längsrichtung der Seitenfläche verstanden, wenn diese durch eine rechteckige Fläche approximiert wird.

Typischerweise sind Ultraschallprüfköpfe zur zerstörungsfreien Werkstückprüfung derart ausgelegt, dass die Kabel zum Ansteuern der Ultraschallwandler auf einer der Einkoppelfläche gegenüberliegenden Seite des Ultraschallkopfs angeschlossen sind. Dies bedingt eine relative große Bauhöhe. Es hat sich herausgestellt, dass diese Art von Ultraschallprüfköpfen nicht dazu geeignet ist, in Großwälzlager seitlich eingeführt zu werden, da hierfür meist nur ein seitlicher Zugang bzw. Spalt zu Verfügung steht, der im Bereich von etwa einem Zentimeter liegt. Ein derartiger schmaler Zugang kann insbesondere zwischen einem Käfig und einem Rotorhauptlager gebildet sein.

Ultraschallprüfköpfe mit herkömmlicher Kabelführung können aufgrund ihrer Bauhöhe im Allgemeinen nicht dazu verwendet werden, um innere Komponenten eines Großwälzlagers im endmontierten Zustand zu prüfen, sofern diese nicht in das Großwälzlager permanent integriert, also eingebaut sind.

Der Ultraschallprüfkopf ist in seiner gegenständlichen Ausgestaltung an den speziellen Anwendungsfall der Ultraschallprüfung angepasst, bei der der Ultraschallprüfkopf lediglich temporär zur Prüfung in das Großwälzlager eingesetzt wird. Der Ultraschallprüfkopf weist hierzu eine sehr geringe Bauhöhe auf. Um eine geringe Bauhöhe bereitzustellen bzw. die vertikale Ausdehnung des Ultraschallprüfkopfs zu minimieren, wurde die Kontaktierung der Ultraschallwandler und die Kabelführung angepasst.

Die einzelnen Ultraschallwandler sind innerhalb des Gehäuses von Kontaktdrähten bevorzugt derart kontaktiert, dass die Kontaktdrähte zumindest abschnittsweise parallel zur lateralen Ausdehnung der ersten Seitenflächen verlaufen. Bevorzugt weisen die Kontaktdrähte einen zweiten, kürzeren Abschnitt auf, der parallel zur lateralen Ausdehnung der zweiten Seitenflächen angeordnet ist. Auf diese Weise wird eine seitlich bzw. lateral durch das Gehäuse verlaufende Signalleitung bereitgestellt. Die Kontaktdrähte sind entsprechend mit Kabeln verbunden, die an einer der zweiten Seitenflächen angeschlossen bzw. angekoppelt sind.

Die Kontaktdrähte verlaufen also vor allem in Richtung der Länge und der Breite des Gehäuses (und nur unwesentlich in der Höhe). Die Kontaktdrähte verlaufen daher in einer Ebene parallel zur Einkoppelfäche des Gehäuses bzw. in einer Ebene parallel zum Deckel.

Der Bauraum in vertikaler Richtung, also in Richtung der vertikalen Ausdehnung des Ultraschallprüfkopfs bzw. dessen Gehäuses ist daher minimal, so dass der Ultraschallprüfkopf durch sehr schmale Zugänge bzw. Spalte in einen Innenraum des Großwälzlagers eingeführt werden kann. Damit der Ultraschallprüfkopf gezielt an die zu prüfende Komponente des Großwälzlagers, beispielsweise an eine Lauffläche oder an einen Wälzkörper, angelegt werden kann, ist das Gehäuse starr, d. h. nicht flexibel ausgebildet.

Die Kontaktdrähte können insbesondere im Wesentlichen L-förmig innerhalb des Gehäuses angeordnet sein.

Die laterale Ausdehnung der ersten Seitenflächen des Gehäuses sind bevorzugt größer als die laterale Ausdehnung der zweiten Seitenflächen. Der Ultraschallprüfkopf hat somit eine im Wesentlichen quaderförmig ausgeprägte Form, wobei die Ultraschallwandler in einer Reihe oder in mehreren Reihen angeordnet sind, die parallel zur lateralen Ausdehnung der ersten Seitenflächen verlaufen, welche die größere laterale Ausdehnung aufweisen.

Die Ultraschallwandler verlaufen also im Wesentlichen parallel zur Länge des Quaders.

In einer bevorzugten Ausführungsform weist das Gehäuse des Ultraschallprüfkopfs eine vertikale Ausdehnung von weniger als 1 cm auf, insbesondere von weniger als 8 mm, beispielsweise etwa 7,2 mm.

Das Gehäuse ist vorzugsweise zumindest zum Teil aus einem Material gebildet, welches sich bei einer durch die Ultraschallprüfung auftretende mechanischen Belastung nicht oder nur unwesentlich durchbiegt.

Vorzugsweise besteht das Gehäuse zumindest zum Teil aus einem Metall oder einer Metalllegierung. Bevorzugt bestehen die Seitenflächen aus einem Metall oder einer Metalllegierung. Das Metall oder die Metalllegierung umfasst bevorzugt Eisen, Kohlenstoff, Chrom, Molybdän und/oder Aluminium.

Die Kabel können als Koaxialkabel ausgeführt sein, insbesondere als mehradrige Multi-Koaxialkabel.

Der Ultraschallprüfkopf der Ultraschallprüfvorrichtung ist in einer bevorzugten Ausführungsform als Phased-Array-Prüfkopf ausgebildet.

Derartige Ausbildungen sind im Stand der Technik an sich bekannt und umfassen im Allgemeinen ansteuerbare Ultraschallwandler, bei denen die Propagationsrichtung der emittierten Ultraschallwellen bzw. -kegel verändert und/oder geschwenkt werden kann.

Über eine geeignete elektronische Ansteuerung ist damit der Prüfbereich flexibel veränderbar, so dass verschiedene Bereiche untersucht werden können, ohne die Position des Ultraschallkopfs verändern zu müssen. Derartige Ausbildungen sind im Zusammenhang des hier vorliegenden Anwendungsgebiets bevorzugt, da der zur Positionierung des Ultraschallprüfkopfs vorhandene Raum innerhalb des Großwälzlagers, insbesondere innerhalb eines zu prüfenden Wälzkörperraums, begrenzt ist.

Zur geeigneten Ansteuerung der einzelnen Ultraschallwandler kann eine dazu ausgebildete elektronische Steuer- und/oder Auswerteeinheit vorgesehen sein.

In einer möglichen Ausführung ist der Ultraschallprüfkopf als linearer Phased-Array-Prüfkopf mit nur einer linearen, also geradlinigen, Reihe von Ultraschallwandlern ausgebildet.

In einer Weiterbildung der Erfindung ist vorgesehen, den Ultraschallprüfkopf als matrixförmigen Phased-Array-Prüfkopf auszubilden. Die Ultraschallwandler sind in dieser Ausführungsform in zumindest zwei parallel zueinander verlaufenden Reihen angeordnet. Durch eine entsprechende Ansteuerung der Ultraschallwandler ist dann ein dreidimensionales Verschwenken der Propagationsrichtung der emittierten Ultraschallwellen bzw. -kegel möglich, so dass ein besonders großer Untersuchungsbereich abgedeckt werden kann.

Bevorzugt sind die in unterschiedlichen Reihen angeordneten Ultraschallwandler durch Isolationselemente akustisch voneinander isoliert. Derartige Isolationselemente vermindern Störsignale zwischen den Ultraschallwandlern, insbesondere kann der so genannte "Cross-Talk" minimiert werden, um die Aussagekraft der Messergebnisse zu verbessern.

Geeignete Isolationselemente bestehen beispielsweise aus Kork, Kautschukmaterialien oder einem anderen Material, welches ein geringes Durchdringungsvermögen für Ultraschall aufweist.

Die Isolationselemente können auch aus Verbundmaterialien gebildet sein, die Kork und Kautschukmaterialien (auch: Gummikork) umfassen. Diese Materialien sind als Meterware erhältlich und werden bevorzugt in Stärken von 0,8 mm bis 2,0 mm verwendet.

In einer Ausführungsform sind die Ultraschallwandler innerhalb des Gehäuses mittels einer akustisch dämpfenden und ausgehärteten Suspension (d.h. Vergussmasse) vergossen, wobei die Suspension Wolframoxid (WO₃) enthält.

Die Suspension ist vorzugsweise elektrisch isolierend. In diesem Fall können Kontaktdrähte im abisolierten Zustand, also ohne isolierende Kunststoffummantelung, in das Gehäuse eingebracht werden, um den zur Kontaktierung der Ultraschallwandler notwendigen Bauraum weiter zu minimieren. Die elektrische Isolierung der Kontaktdrähte erfolgt über die Suspension, in der die Kontaktdrähte eingebettet sind.

Die Suspension stellt darüber hinaus einen mechanischen Schutz der Kontaktdrähte bzw. der Kontaktierungsstellen mit den Ultraschallwandlern sicher.

Als Suspension ist eine Wolframoxid enthaltende Suspension bevorzugt, da diese zusätzlich zur Dämpfung der mechanischen Schwingungen der Ultraschallwandler beiträgt.

Die Verwendung einer Wolframoxid enthaltenden Suspension stellt somit ein breitbandiges Pulsspektrum sicher, welches einem Ultraschallimpuls von kurzer Dauer entspricht.

Des Weiteren verschließt die ausgehärtete Suspension den Ultraschallprüfkopf nach außen gegen den Einfluss von Medien.

Bevorzugt besteht die Oberfläche der Einkoppelfläche und/oder der Deckelfläche zumindest abschnittsweis aus einer ausgehärteten Suspension, insbesondere aus einer Wolframoxid enthaltenden Suspension.

Des Weiteren kann vorgesehen sein, dass mehrere parallel zueinander angeordnete Kabel an einer der zweiten Seitenflächen angekoppelt und mit den Kontaktdrähten verbunden sind. Auf diese Weise können eine große Anzahl von Ultraschallwandlern kontaktiert werden, bei gleichzeitiger Minimierung der Bauhöhe bzw. bei gleichzeitiger Minimierung der vertikalen Ausdehnung des Ultraschallprüfkopfs senkrecht zur Einkoppelfläche.

Bei Ultraschallprüfköpfen, welche eine große Anzahl von Ultraschallwandlern aufweisen, hat es sich als vorteilhaft erwiesen, mehrere mehradrige Kabel vorzusehen, da ein einziges mehradriges Kabel aufgrund des relativ großen Querschnitts bereits einen vergleichsweise großen Bauraum in vertikaler Richtung in Anspruch nehmen würde.

In einer vorteilhaften Ausgestaltung der Erfindung sind beispielsweise 64 Ultraschallwandler in zwei Reihen vorgesehen. Die zur Kontaktierung vorgesehenen Kontaktdrähte sind mit vier Kabeln verbunden, die jeweils als 16-adrige Multi-Koaxialkabel ausgeführt sind und parallel nebeneinander an einer der zweiten Seitenflächen angekoppelt sind. Der Querschnitt der Kabel kann bei dieser gegenständlichen Ausbildung zumindest näherungsweise der vertikalen Ausdehnung des Gehäuses entsprechen.

Vorzugsweise ist jeder Kontaktdraht zum Kontaktieren der Ultraschallwandler mit einer separaten Ader der mehradrigen Kabel verbunden.

An einer der zweiten Seitenflächen kann zumindest ein Schlauch zum Zuführen eines Koppelfluids zur Einkoppelfläche des Ultraschallprüfkopfs angekoppelt sein. Das Koppelfluid oder -medium weist vorzugsweise eine niedrige Viskosität auf und kann von einem Öl bereitgestellt sein.

Der zumindest eine Schlauch zum Zuführen des Koppelfluids oder-medium kann in fluidischer Verbindung mit Austrittsöffnungen an der Einkoppelfläche des Ultraschallprüfkopfs stehen.

Das Koppelfluid oder -medium dient bei der Ultraschallprüfung dazu, das Einkoppeln der Ultraschallwellen in das zu prüfende Bauteil bzw. in die zu prüfende Komponente zu erleichtern.

In einer Ausführungsform ist an der Einkoppelfläche eine magnetische Fixereinrichtung zum temporären Fixieren des Ultraschallkopfs an der zu prüfenden Komponente angebracht. Die magnetische Fixiereinrichtung umfasst beispielsweise mehrere, über die Einkoppelfläche verteilt angeordnete Permanentmagnete, die den Ultraschallprüfkopf über seine Einkoppelfläche an der zu prüfenden Komponente kraftschlüssig fixieren.

Der Ultraschallprüfkopf kann endseitig an einer Führungsschiene befestigt sein. An dem dem Ultraschallprüfkopf abgewandten bzw. gegenüberliegenden Ende der Führungsschiene ist eine weitere magnetische Fixiereinrichtung zum Fixieren der Führungsschiene an dem Großwälzlager vorgesehen. Die weitere Fixiereinrichtung umfasst beispielsweise weitere Permanentmagnete und ist dazu ausgebildet, die Ultraschallprüfvorrichtung außenseitig beispielsweise an einem Käfig des Großwälzlager kraftschlüssig zu fixieren.

In einer Ausgestaltung der Erfindung weist die Führungsschiene zumindest zwei, zueinander in einem stumpfen Winkel verlaufende Schienenabschnitte auf. Die konkreten geometrischen Abmessungen der Führungsschiene sowie der Winkel, in dem die zumindest zwei Schienenabschnitte zueinander angeordnet sind, sind auf die Gestalt des zu prüfenden Großwälzlager angepasst. Insbesondere sind die geometrischen Abmessungen so angepasst, dass der endseitig an Führungsschiene befestigte Ultraschallprüfkopf bei fixierter weiterer Fixiereinrichtung an einer geeigneten Stelle innerhalb des Großwälzlagers angeordnet werden kann.

Ein Verfahren zum Herstellen eines Ultraschallprüfkopfs für eine Ultraschallprüfvorrichtung umfasst die folgende Schritte:
a) Bereitstellen zumindest einer linearen Reihe Ultraschallwandler und eines Gehäuses des Ultraschallprüfkops, das erste und zweite Seitenflächen hat, wobei die ersten und zweiten Seitenflächen quer zueinander verlaufen,
b) Anordnen der zumindest einen linearen Reihe Ultraschallwandler parallel zur lateralen Ausdehnung der ersten Seitenflächen in dem Gehäuse,
c) Fixieren der zumindest einen linearen Reihe Ultraschallwandler durch Vergießen, wobei eine Einkoppelfläche des Ultraschallprüfkopfs gebildet wird, und
d) Kontaktieren der Ultraschallwandler mit Kontaktdrähten, welche im Wesentlichen in einer Ebene parallel zur Einkoppelfläche verlaufen und zu einer der zweiten Seitenflächen geführt werden, an welcher die Kontaktdrähte mit Kabeln verbunden werden.

Die zumindest eine Reihe Ultraschallwandler wird durch Einbringen und Aushärten einer Lage einer Suspension, insbesondere einer Wolframoxid enthaltenen Suspension, fixiert, wobei die Lage die Einkoppelfläche bildet.

Außerdem kann vorgesehen sein, dass das Verfahren ferner den folgenden Schritt umfasst:
e) Bilden der Deckelfläche durch eine Lage der Suspension, insbesondere der Wolframoxid enthaltenden Suspension, die eingebracht und ausgehärtet wird, wobei die Kontaktdrähte mechanisch fixiert werden.

Die Ultraschallwandler können mit Kontaktdrähten ohne isolierende Kunststoffummantelung kontaktiert werden.

Vorteile des Herstellungsverfahrens ergeben sich unmittelbar bereits aus der vorhergehenden Beschreibung mit Bezug auf die Ultraschallvorrichtung bzw. des Ultraschallprüfkopfs.

Insbesondere wird durch das angegebene Herstellungsverfahren eine geringe Bauhöhe bezüglich der vertikalen Ausdehnung des Ultraschallprüfkopfs sichergestellt, da eine seitliche Kabelführung bereitgestellt wird. Wenn die Kontaktdrähte ohne isolierende Kunststoffummantelung eingebracht werden, können sehr kompakte Bauformen realisiert werden. Die notwendige elektrische Isolierung wird in diesem Fall von der ausgehärteten Suspension bereitgestellt.

In einer Ausgestaltung des erfindungsgemäßen Verfahrens ist vorgesehen, die Lage bzw. die Lagen der Suspension in flüssigem Zustand einzubringen und durch eine thermische Behandlung bei 35° C bis 45° C für 3,5 Stunden bis 4,5 Stunden, insbesondere bei etwa 40° C für etwa 4 Stunden, auszuhärten.

Durch Einbringen und Aushärten der ersten Lage können zusätzlich Isolationselemente zur akustischen Isolation in ihrer Position fixiert werden.

Beispielsweise werden längliche Isolationselemente zwischen parallelen Reihen von Ultraschallwandlern angeordnet, um Störsignale zu dämpfen. Durch Einbringen und Aushärten der Suspension werden die eingebrachten Isolationselemente in ihrer Position fixiert.

Vor allem kann die zuvor beschriebene Ultraschallprüfvorrichtung mit dem beschriebenen Verfahren hergestellt sein.

Die Erfindung wird nachstehend auch hinsichtlich weiterer Merkmale und Vorteile anhand der Beschreibung von Ausführungsbeispielen und unter Bezugnahme auf die beiliegende Zeichnung näher erläutert. Dabei zeigen:
- Figur 1 einen Ultraschallprüfkopf für eine Ultraschallprüfvorrichtung in einer perspektivischen Darstellung,
- Figur 2 eine Draufsicht auf eine Einkoppelseite des Ultraschallprüfkopfs der Figur 1,
- Figur 3 eine perspektivische Darstellung des Ultraschallprüfkopfs der Figur 1 endseitig an einer Führungsschiene befestigt und mit angeschlossenen Schläuchen zur Zuführung von Koppelfluid, und
- Figur 4 eine Unteransicht des Ultraschallprüfkopfs der Figur 1 während der Herstellung, wobei die Kontaktierung von angeordneten Ultraschallwandlern durch Kontaktdrähte sichtbar ist.

Gleiche oder funktionsgleiche Teile sind in allen Figuren mit denselben Bezugszeichen versehen.

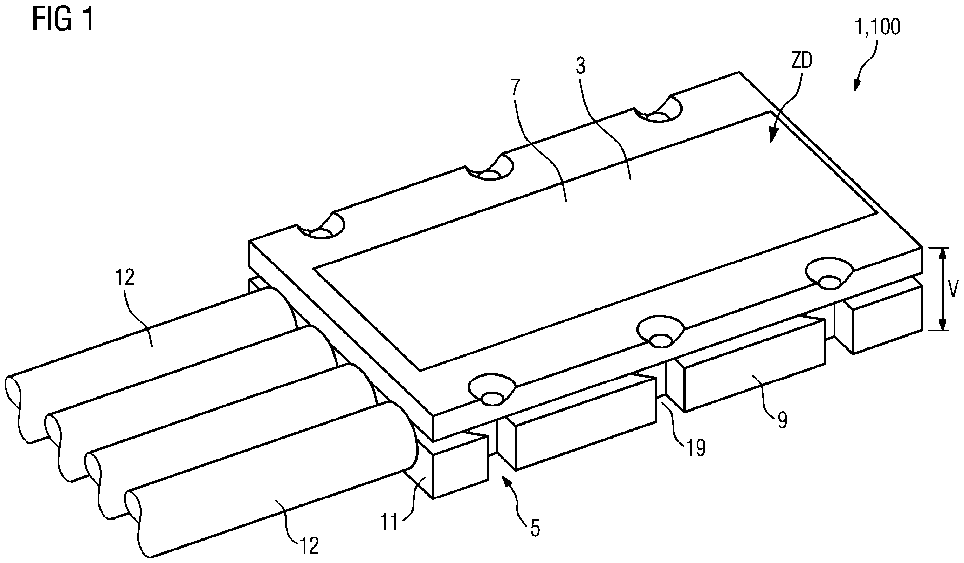

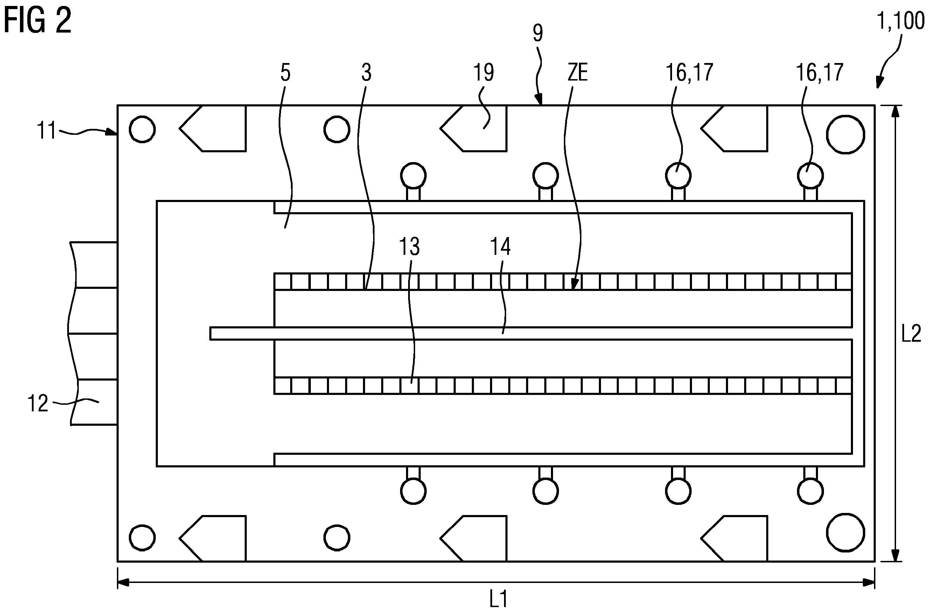

Figur 1 und Figur 2 zeigen einen Ultraschallprüfkopf 1 für eine Ultraschallprüfvorrichtung 100 zum Prüfen von inneren Komponenten eines Großwälzlagers.

Der Ultraschallprüfkopf 1 weist ein im Wesentlichen quaderförmiges Gehäuse 3 auf, mit einer Einkoppelfläche 5, einer der Einkoppelfläche 5 gegenüberliegende und dazu parallel verlaufende Deckelfläche 7, und senkrecht zur Einkoppelfläche 5 verlaufenden ersten und zweiten Seitenflächen 9, 11.

Die ersten Seitenflächen 9 weisen, wie insbesondere aus der Draufsicht der Figur 2 ersichtlich, eine laterale Ausdehnung L1 auf, die größer ist als die laterale Ausdehnung L2 der zweiten Seitenflächen 11.

Die zweiten Seitenflächen 11 sind im Wesentlichen quer zu den ersten Seitenflächen 9 angeordnet. Dementsprechend haben die Projektionen der ersten und zweiten Seitenflächen 9, 11 in der Draufsicht der Figur 2 einen rechten Winkel zueinander.

An einer der zweiten Seitenflächen 11 sind vier parallel zueinander angeordnete, mehradrige Kabel 12 angeschlossen, die zur Übertragung von Steuersignalen und Antwortsignalen dienen, welche piezoelektrische Ultraschallwandler 13 ansteuern bzw. von diesen in Abhängigkeit eines erfassten Ultraschallechos generiert werden.

Die Ultraschallwandler 13 sind in dem dargestellten, nicht einschränkend aufzufassenden Ausführungsbeispiel in zwei zueinander parallelen Reihen angeordnet.

Zwischen den beiden parallelen Reihen der Ultraschallwandler 13 befindet sich ein längliches Isolationselement 14 aus Kork, welches dazu dient, den so genannten "Cross-Talk" zwischen den Ultraschallwandlern 13 unterschiedlicher Reihen zu minimieren.

Ein zentraler Bereich ZD der Deckelfläche 7 und ein zentraler Bereich ZE der Einkoppelfläche 5 sind durch eine ausgehärtete Suspension gebildet, die Wolframoxid (WO₃) enthält.

Randseitig um den zentralen Bereich ZE der Einkoppelfläche 5 herum sind mehrere Permanentmagnete 15 angeordnet, die als magnetische Fixiereinrichtung 17 zum kraftschlüssigen Fixieren des Ultraschallprüfkopfs 1 über seine Einkoppelfläche 5 an einer zu prüfenden Komponente, insbesondere eines Großwälzlagers, fungieren.

Die vertikale Ausdehnung V der ersten und zweiten Seitenflächen 9, 11 bestimmt im Wesentlichen die Bauhöhe des Gehäuses 3 des Ultraschallprüfkopfs 1. Die Bauhöhe ist derart ausgelegt, dass der Ultraschallprüfkopf 1 in einen Spalt oder einen anderweitig geformten Zugang seitlich in ein Großwälzlager eingeführt werden kann.

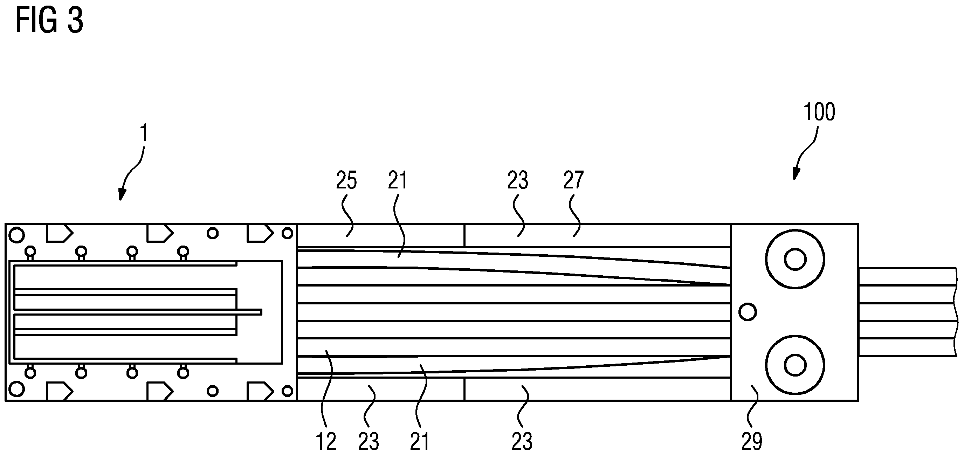

An der Einkoppelfläche 5 sind ferner Austrittsöffnungen 19 für ein Kopplungsfluid vorgesehen, die fluidisch mit Schläuchen 21 in Verbindung stehen. Die Schläuche 21 dienen der Zuführung des Kopplungsfluids zum Ultraschallprüfkopf 1 (siehe Figur 3).

Ferner ist zu sehen, dass der Ultraschallprüfkopf 1 endseitig an einer abgewinkelten Führungsschiene 23 angeordnet ist, die zwei Schienenabschnitte 25, 27 aufweist. Die Schienenabschnitte 25, 27 verlaufen in einem stumpfen Winkel zueinander. Dieser Winkel ist in der dargestellten Ausführungsform in etwa 120°.

Die Führungsschiene 23 dient zum Einführen des Ultraschallprüfkopf 1 in das Innere des Großwälzlagers und zum kraftschlüssigen Fixieren desselbigen. Hierzu ist an dem dem Ultraschallprüfkopf 1 gegenüberliegenden Ende der Führungsschiene 23 eine weitere Fixiereinrichtung 29 vorgesehen, welche weitere Permanentmagnete umfasst. Die weitere Fixiereinrichtung 29 dient zum kraftschlüssigen Fixieren der Führungsschiene 23 und den daran befestigten Ultraschallprüfkopf 1 während der Ultraschallprüfung.

Um eine kompakte Bauweise des Ultraschallprüfkopfs 1 zu erreichen, wurde das Herstellungsverfahren des Ultraschallprüfkopfs 1 angepasst.

In einem ersten Verfahrensschritt wird das Gehäuse 3 bereitgestellt, genauer gesagt die zueinander querstehenden ersten und zweiten Seitenflächen 9,11, sowie die den zentralen Bereich ZD bzw. ZE umgebenden Bereiche der Einkoppelfläche 5 bzw. der Deckelfläche 7.

Zusätzlich wird eine lineare Reihe Ultraschallwandler 13 bereitgestellt, die innerhalb des Gehäuses 3 so angeordnet wird, dass die lineare Reihe Ultraschallwandler 13 parallel zu lateralen Ausdehnung L1 der ersten Seitenflächen 9 ist.

Zur Herstellung des Ultraschallprüfkopfs 1 wird anschließend eine Wolframoxid (WO₃) enthaltende Suspension in einer Höhe von beispielsweise etwa ca. 1,5 mm in das durch die ersten und zweiten Seitenflächen 9, 11 definierte Gehäuse 3 appliziert und durch thermische Behandlung ausgehärtet. Dies dient der elektrischen Isolation und dem mechanischen Schutz der Bauteile. Zusätzlich werden in diesem Schritt auch die Ultraschallwandler 13 fixiert, und es wird die Einkoppelfläche 5 gebildet.

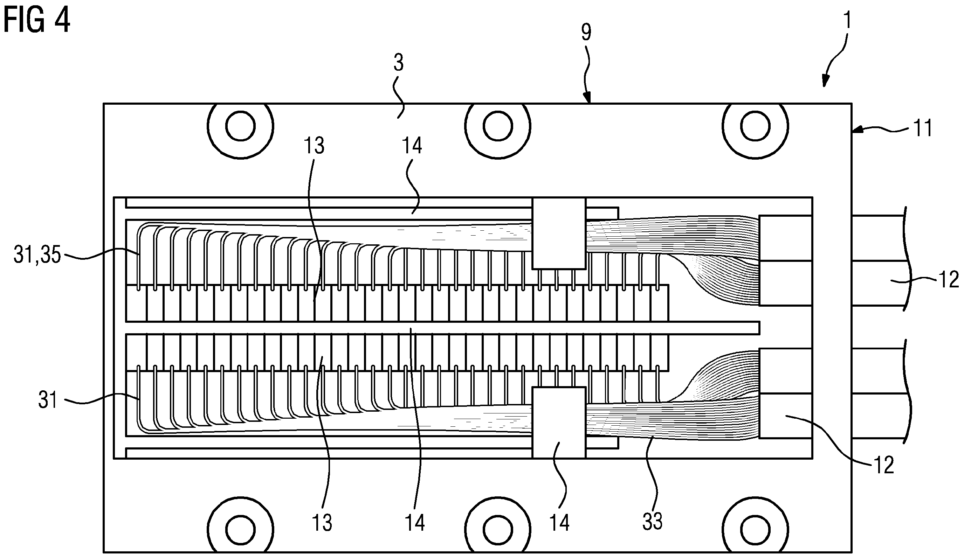

Anschließend werden die Kontaktdrähte 31, beispielsweise wie in Figur 4 dargestellt, in das Gehäuse 3 eingebracht. Die abisolierten Kontaktdrähte 31, d.h. die Kontaktdrähte 31 ohne isolierende Kunststoffummantelung, kontaktieren die piezoelektrischen Ultraschallwandlern 13.

Jeder Kontaktdraht 31 weist einen Abschnitt 33 auf, der parallel zur lateralen Ausdehnung L1 der ersten Seitenflächen 9 des Ultraschallprüfkopfes 1 verläuft, sowie einen weiteren, kürzeren Abschnitt 35 zur Kontaktierung des jeweiligen Ultraschallwandlers 13 auf. Der kürzere Abschnitt 35 verläuft parallel zur lateralen Ausdehnung L2 der zweiten Seitenflächen 11.

In einem nächsten Verfahrensschritt werden die Kontaktdrähte 31 in einer Ebene, die im Wesentlichen parallel zur Einkoppelfläche 5 ist, an den piezoelektrischen Ultraschallwandlern 13 innerhalb des Gehäuses vorbeigeführt, insbesondere zwischen den ersten Seitenflächen 9 und der linearen Reihe Ultraschallwandler 13, und mit den an einer der zweiten Seitenflächen 11 angekoppelten Kabeln 12 verbunden.

Prinzipiell werden zur Elektrifizierung der piezoelektrischen Ultraschallwandler 13 beispielsweise eines mit 64 Ultraschallwandlern 13 ausgestatteten Ultraschallprüfkopfs 1 eine entsprechende Anzahl an Kontaktdrähte 31 bzw. Koaxialleitungen benötigt, also 64 Kontaktdrähte 31 bzw. Koaxialleitungen. Aufgrund der dimensionalen Beschränkungen wird jedoch kein einzelnes 64-adriges Kabel 12, sondern mehrere, beispielsweise vier 16-adrige Kabel 12, insbesondere multi-Koaxialkabel, mit entsprechenden Kontaktdrähten 31 verbunden, die in der Ebene der piezoelektrischen Ultraschallwandler 13 angeordnet und seitlich aus dem Gehäuse 3 herausgeführt werden. Dies ist im Detail in Figur 4 dargestellt.

In einem abschließenden Schritt wird nun nochmals eine Wolframoxid enthaltende Suspension in den in Figur 4 ersichtlichen rechteckigen Hohlraum gefüllt, bis die Oberkante des Gehäuses 3 erreicht wird.

Die Suspension erfüllt hierbei zwei wesentliche Aufgaben: Zum einen dient sie der Dämpfung der mechanischen Schwingungen der piezoelektrischen Ultraschallwandler 13 und sorgt so für ein breitbandiges Pulsspektrum. Zum anderen verschließt die ausgehärtete Suspension das Gehäuse 3 bzw. den Ultraschallprüfkopf 1 nach außen gegen den Einfluss von Medien und bildet somit gleichermaßen einen Teil der Deckelfläche 7.

Die im flüssigen Zustand zu applizierende Suspension wird vorzugsweise für 4 Stunden in einem Ofen bei etwa 40°C ausgehärtet.

### Bezuaszeichenliste

- 1: Ultraschallprüfkopf
- 3: Gehäuse
- 5: Einkoppelfläche
- 7: Deckelfläche
- 9: erste Seitenfläche
- 11: zweite Seitenfläche
- 12: Kabel
- 13: Ultraschallwandler
- 14: Isolationselement
- 15: Permanentmagnet
- 17: Fixiereinrichtung
- 19: Austrittsöffnung
- 21: Schlauch
- 23: Führungsschiene
- 25: Schienenabschnitt
- 27: Schienenabschnitt
- 29: Fixiereinrichtung
- 31: Kontaktdraht
- 33: Abschnitt
- 35: Abschnitt
- L1: laterale Ausdehnung
- L2: laterale Ausdehnung
- V: vertikale Ausdehnung
- ZD: zentraler Bereich
- ZE: zentraler Bereich
- 100: Ultraschallprüfvorrichtung
- ZE: zentraler Bereich
- 100: Ultraschallprüfvorrichtung

## Patentansprüche

1. Ultraschallprüfvorrichtung (100), mit einem Ultraschallprüfkopf (1) zum Prüfen einer inneren Komponente eines Großwälzlagers, welcher ein zum Einführen in ein Großwälzlager ausgebildetes starres Gehäuse (3) aufweist, das eine Einkoppelfläche (5), eine der Einkoppelfläche (5) gegenüberliegenden Deckelfläche (7) und senkrecht zur Einkoppelfläche (5) und zur Deckelfläche (7) verlaufende erste und zweite Seitenflächen (9, 11) umfasst,
wobei die ersten und zweiten Seitenflächen (9, 11) die gleiche, die Bauhöhe des Gehäuses (3) bestimmende vertikale Ausdehnung (V) haben und quer zueinander verlaufen, wobei an der Einkoppelfläche (5) eine Vielzahl von Ultraschallwandlern (13) zum Einkoppeln von Ultraschallwellen in die zu prüfende Komponente angebracht sind, die in zumindest einer linearen Reihe angeordnet sind und parallel zur lateralen Ausdehnung (L1) der ersten Seitenflächen (9) verlaufen,
wobei jeder Ultraschallwandler (13) über innerhalb des Gehäuses (3) verlaufende Kontaktdrähte (31) kontaktiert ist, die im Wesentlichen in einer Ebene parallel zur Einkoppelfläche (5) verlaufen und mit an einer der zweiten Seitenflächen (11) angekoppelten Kabeln (12) verbunden sind,
**dadurch gekennzeichnet, dass**
die Ultraschallwandler (13) innerhalb des Gehäuses (3) mittels einer akustisch dämpfenden und ausgehärteten Suspension vergossen sind, und dass
die Einkoppelfläche (5) durch eine Lage der dämpfenden und ausgehärteten Suspension gebildet ist.

2. Ultraschallprüfvorrichtung (100) nach Anspruch 1, **dadurch gekennzeichnet, dass** der Ultraschallprüfkopf (1) als matrixförmiger Phased-Array-Prüfkopf ausgebildet ist, wobei die Ultraschallwandler (13) in zumindest zwei parallel zueinander verlaufenden Reihen angeordnet sind.

3. Ultraschallprüfvorrichtung (100) nach Anspruch 1 oder 2, **dadurch gekennzeichnet, dass** jeder Kontaktdraht (31) einen Abschnitt (33) aufweist, der parallel zur lateralen Ausdehnung (L1) der ersten Seitenflächen (9) verläuft, und insbesondere einen zweiten, kürzeren Abschnitt (35) aufweist, der parallel zur lateralen Ausdehnung (L2) der zweiten Seitenflächen (11) verläuft.

4. Ultraschallprüfvorrichtung (100) nach einem der vorhergehenden Ansprüche, **dadurch gekennzeichnet, dass** die Suspension Wolframoxid enthält.

5. Ultraschallprüfvorrichtung (100) nach einem der vorhergehenden Ansprüche, **dadurch gekennzeichnet, dass** mehrere parallel zueinander angeordnete Kabel (12) an einer der zweiten Seitenflächen (11) angekoppelt sind und mit den Kontaktdrähten (31) verbunden sind.

6. Ultraschallprüfvorrichtung (100) nach einem der vorhergehenden Ansprüche, **dadurch gekennzeichnet, dass** an einer der zweiten Seitenflächen (11) zumindest ein Schlauch (21) zum Zuführen ein Koppelfluids oder -mediums zur Einkoppelfläche (5) des Ultraschallprüfkopfs (1) angekoppelt ist.

7. Ultraschallprüfvorrichtung (100) nach einem der vorhergehenden Ansprüche, **dadurch gekennzeichnet, dass** an der Einkoppelfläche (5) eine magnetische Fixiereinrichtung (17) zum temporären Fixieren des Ultraschallprüfkopfs (1) an der zu prüfenden Komponente angebracht ist.

8. Ultraschallprüfvorrichtung (100) nach einem der vorhergehenden Ansprüche, **dadurch gekennzeichnet, dass** der Ultraschallprüfkopf (1) endseitig an einer Führungsschiene (23) befestigt ist, welche an dem dem Ultraschallprüfkopf (1) abgewandten Ende eine weitere magnetische Fixiereinrichtung (29) zum Fixieren an dem Großwälzlager aufweist.

9. Ultraschallprüfvorrichtung (100) nach Anspruch 8, **dadurch gekennzeichnet, dass** die Führungsschiene (23) zumindest zwei, zueinander in einem stumpfen Winkel verlaufende Schienenabschnitte (25, 27) aufweist.

10. Ultraschallprüfvorrichtung (100) nach einem der vorhergehenden Ansprüche, **dadurch gekennzeichnet, dass** die laterale Ausdehnung (L1) der ersten Seitenflächen (9) größer ist als die laterale Ausdehnung (L2) der zweiten Seitenflächen (11).

11. Verfahren zum Herstellen eines Ultraschallprüfkopfs (1) für eine Ultraschallprüfvorrichtung (100) gemäß einem der vorhergehenden Ansprüche, welches die folgenden Schritte umfasst:
a) Bereitstellen zumindest einer linearen Reihe Ultraschallwandler (13) und eines Gehäuses (3) des Ultraschallprüfkopfs (1), das erste und zweite Seitenflächen (9, 11) hat, wobei die ersten und zweiten Seitenflächen (9, 11) quer zueinander verlaufen,
b) Anordnen der zumindest einen linearen Reihe Ultraschallwandler (13) parallel zur lateralen Ausdehnung (L1) der ersten Seitenflächen (9) in dem Gehäuse (3),
c) Fixieren der zumindest einen linearen Reihe Ultraschallwandler (13) durch Vergießen, wobei eine Einkoppelfläche (5) des Ultraschallprüfkopfs (1) gebildet wird, und
d) Kontaktieren der Ultraschallwandler (13) mit Kontaktdrähten (31), welche im Wesentlichen in einer Ebene parallel zur Einkoppelfläche (5) verlaufen und zu einer der zweiten Seitenflächen (11) geführt werden, an welcher die Kontaktdrähte (31) mit Kabeln (12) verbunden werden,
wobei die zumindest eine Reihe Ultraschallwandler (13) durch Einbringen und Aushärten einer Lage der Suspension fixiert wird, wobei die Lage die Einkoppelfläche (5) bildet.

12. Verfahren nach Anspruch 11, **dadurch gekennzeichnet, dass** das Verfahren ferner den folgenden Schritt umfasst:
e) Bilden der Deckelfläche (7) durch eine Lage einer Suspension, insbesondere einer Wolframoxid enthaltenden Suspension, die eingebracht und ausgehärtet wird, wobei die Kontaktdrähte (31) mechanisch fixiert werden.

13. Verfahren nach einem der Ansprüche 11 oder 12, **dadurch gekennzeichnet, dass** die Lage bzw. die Lagen der Suspension, insbesondere der Wolframoxid enthaltenden Suspension, in flüssigem Zustand eingebracht wird bzw. werden und durch eine thermische Behandlung bei 35 °C bis 45 °C für 3,5 Stunden bis 4,5 Stunden, insbesondere bei etwa 40 °C für etwa 4 Stunden, ausgehärtet wird bzw. werden.

## Claims

1. An ultrasonic testing apparatus (100) comprising an ultrasonic probe (1) for testing an internal component of a large-diameter bearing, the probe having a rigid housing (3) adapted to be inserted into a large-diameter bearing, the housing having a coupling surface (5), a cover surface (7) opposite the coupling surface (5), and first and second side surfaces (9, 11) perpendicular to the coupling surface (5) and the cover surface (7),
wherein the first and second side surfaces (9, 11) have the same vertical extent (V) determining the height of the housing (3) and extend transversely to one another, wherein a plurality of ultrasonic transducers (13) for coupling ultrasonic waves into the component to be tested are mounted on the coupling surface (5), which ultrasonic transducers are arranged in at least one linear row and extend parallel to the lateral extent (L1) of the first side surfaces (9),
wherein each ultrasonic transducer (13) is contacted by contact wires (31) extending within the housing (3), substantially in a plane parallel to the coupling surface (5) and connected to cables (12) coupled to one of the second side surfaces (11),
**characterized in that**
the ultrasonic transducers (13) are cast within the housing (3) by means of an acoustically damping and hardened suspension, and **in that**
the coupling surface (5) is formed by a layer of the damping and hardened suspension.

2. Ultrasonic testing apparatus (100) according to claim 1, **characterized in that** the ultrasonic probe (1) is designed as a matrix-shaped phased array probe, wherein the ultrasonic transducers (13) are arranged in at least two rows running parallel to one another.

3. Ultrasonic testing apparatus (100) according to claim 1 or 2, **characterized in that** each contact wire (31) has a section (33) running parallel to the lateral extent (L1) of the first side faces (9) and, in particular, a second, shorter section (35) running parallel to the lateral extent (L2) of the second side faces (11).

4. Ultrasonic testing apparatus (100) according to any one of the preceding claims, **characterized in that** the suspension contains tungsten oxide.

5. Ultrasonic testing apparatus (100) according to any one of the preceding claims, **characterized in that** a plurality of cables (12) arranged parallel to each other are coupled to one of the second side surfaces (11) and connected to the contact wires (31).

6. Ultrasonic testing apparatus (100) according to any one of the preceding claims, **characterized in that** at least one hose (21) for supplying a coupling fluid or medium to the coupling surface (5) of the ultrasonic probe (1) is coupled to one of the second side surfaces (11).

7. Ultrasonic testing apparatus (100) according to one of the preceding claims, **characterized in that** a magnetic fastening device (17) for temporarily fastening the ultrasonic probe (1) to the component to be tested is attached to the coupling surface (5).

8. Ultrasonic testing apparatus (100) according to one of the preceding claims, **characterized in that** the ultrasonic probe (1) is fastened at the end to a guide rail (23) which, at the end facing away from the ultrasonic probe (1), has a further magnetic fastening device (29) for fastening to the large-diameter bearing.

9. Ultrasonic testing apparatus (100) according to claim 8, **characterized in that** the guide rail (23) has at least two rail sections (25, 27) extending at an obtuse angle to each other.

10. Ultrasonic testing apparatus (100) according to one of the preceding claims, **characterized in that** the lateral extent (L1) of the first side surfaces (9) is greater than the lateral extent (L2) of the second side surfaces (11).

11. A method of manufacturing an ultrasonic probe (1) for an ultrasonic testing apparatus (100) according to any one of the preceding claims, comprising the following steps:
a) providing at least one linear array of ultrasonic transducers (13) and a housing (3) of the ultrasonic probe (1) having first and second side surfaces (9, 11), the first and second side surfaces (9, 11) being transverse to each other,
b) arranging the at least one linear row of ultrasonic transducers (13) parallel to the lateral extent (L1) of the first side surfaces (9) in the housing (3),
c) fastening the at least one linear row of ultrasonic transducers (13) by casting, forming a coupling surface (5) of the ultrasonic probe (1), and
d) contacting the ultrasonic transducers (13) with contact wires (31) which run substantially on a plane parallel to the coupling surface (5) and are guided to one of the second side surfaces (11) at which the contact wires (31) are connected to cables (12),
wherein said at least one row of ultrasonic transducers (13) is fastened by introducing and hardening a layer of said suspension, said layer forming said coupling surface (5).

12. A method according to claim 11, **characterized in that** the method further comprises the step of:
e) forming the cover surface (7) by a layer of a suspension, in particular a suspension containing tungsten oxide, which is introduced and hardened, whereby the contact wires (31) are mechanically fastened.

13. A method according to any one of claims 11 or 12, **characterized in that** the layer or layers of the suspension, in particular the tungsten oxide-containing suspension, is or are introduced in the liquid state and is or are hardened by thermal treatment at 35 °C to 45 °C for 3.5 hours to 4.5 hours, in particular at about 40 °C for about 4 hours.

## Revendications

1. Dispositif de contrôle par ultrasons (100), avec une sonde à ultrasons (1) pour contrôler un composant interne d'un palier à roulement de grande dimension, lequel présente un boîtier (3) rigide réalisé pour être introduit dans un palier à roulement de grande dimension, qui comprend une surface d'injection (5), une surface de couvercle (7) opposée à la surface d'injection (5) et des première et deuxième surfaces latérales (9, 11) s'étendant perpendiculairement à la surface d'injection (5) et à la surface de couvercle (7),
dans lequel les première et deuxième surfaces latérales (9, 11) ont la même étendue verticale (V) déterminant la hauteur de construction du boîtier (3) et s'étendent transversalement l'une par rapport à l'autre, dans lequel une pluralité de transducteurs ultrasonores (13) sont montés sur la surface d'injection (5) pour injecter des ondes ultrasonores dans le composant à contrôler, qui sont disposés en au moins une rangée linéaire et s'étendent parallèlement à l'étendue latérale (L1) des premières surfaces latérales (9),
dans lequel chaque transducteur ultrasonore (13) est mis en contact par l'intermédiaire de fils de contact (31) s'étendant à l'intérieur du boîtier (3), qui s'étendent sensiblement dans un plan parallèle à la surface d'injection (5) et qui sont connectés à des câbles (12) couplés à l'une des deuxièmes surfaces latérales (11),
**caractérisé en ce que**
les transducteurs ultrasonores (13) sont coulés à l'intérieur du boîtier (3) au moyen d'une suspension amortissante acoustiquement et durcie, et que
la surface d'injection (5) est formée par une couche de la suspension amortissante et durcie.

2. Dispositif de contrôle par ultrasons (100) selon la revendication 1, **caractérisé en ce que** la sonde à ultrasons (1) est réalisée comme une sonde multi-éléments en forme de matrice, dans lequel les transducteurs ultrasonores (13) sont disposés en au moins deux rangées s'étendant parallèlement l'une à l'autre.

3. Dispositif de contrôle par ultrasons (100) selon la revendication 1 ou 2, **caractérisé en ce que** chaque fil de contact (31) présente une section (33) qui s'étend parallèlement à l'étendue latérale (L1) des premières surfaces latérales (9), et notamment une deuxième section (35) plus courte, qui s'étend parallèlement à l'étendue latérale (L2) des deuxièmes surfaces latérales (11).

4. Dispositif de contrôle par ultrasons (100) selon l'une quelconque des revendications précédentes, **caractérisé en ce que** la suspension contient de l'oxyde de tungstène.

5. Dispositif de contrôle par ultrasons (100) selon l'une quelconque des revendications précédentes, **caractérisé en ce que** plusieurs câbles (12) disposés parallèlement les uns aux autres sont couplés à l'une des deuxièmes surfaces latérales (11) et sont connectés aux fils de contact (31).

6. Dispositif de contrôle par ultrasons (100) selon l'une quelconque des revendications précédentes, **caractérisé en ce qu'**au moins un tuyau (21) est couplé à l'une des deuxièmes surfaces latérales (11) pour amener un fluide ou milieu de couplage à la surface d'injection (5) de la sonde à ultrasons (1).

7. Dispositif de contrôle par ultrasons (100) selon l'une quelconque des revendications précédentes, **caractérisé en ce qu'**un système de fixation magnétique (17) est monté sur la surface d'injection (5) pour fixer temporairement la sonde à ultrasons (1) sur le composant à contrôler.

8. Dispositif de contrôle par ultrasons (100) selon l'une quelconque des revendications précédentes, **caractérisé en ce que** la sonde à ultrasons (1) est fixée côté extrémité à un rail de guidage (23), lequel présente à l'extrémité opposée à la sonde à ultrasons (1) un autre système de fixation magnétique (29) à fixer sur le palier à roulement de grande dimension.

9. Dispositif de contrôle par ultrasons (100) selon la revendication 8, **caractérisé en ce que** le rail de guidage (23) présente au moins deux sections de rail (25, 27) s'étendant l'une par rapport à l'autre selon un angle obtus.

10. Dispositif de contrôle par ultrasons (100) selon l'une quelconque des revendications précédentes, **caractérisé en ce que** l'étendue latérale (L1) des premières surfaces latérales (9) est supérieure à l'étendue latérale (L2) des deuxièmes surfaces latérales (11).

11. Procédé de fabrication d'une sonde à ultrasons (1) pour un dispositif de contrôle par ultrasons (100) selon l'une quelconque des revendications précédentes, lequel comprend les étapes suivantes :
a) la fourniture d'au moins une rangée linéaire de transducteurs ultrasonores (13) et d'un boîtier (3) de la sonde à ultrasons (1), qui a des première et deuxième surfaces latérales (9, 11), dans lequel les première et deuxième surfaces latérales (9, 11) s'étendent transversalement l'une par rapport à l'autre,
b) la disposition de la au moins une rangée linéaire de transducteurs ultrasonores (13) parallèlement à l'étendue latérale (L1) des premières surfaces latérales (9) dans le boîtier (3),
c) la fixation de l'au moins une rangée linéaire de transducteurs ultrasonores (13) par coulée, dans lequel une surface d'injection (5) de la sonde à ultrasons (1) est formée, et
d) la mise en contact des transducteurs ultrasonores (13) avec des fils de contact (31), lesquels s'étendent sensiblement dans un plan parallèle à la surface d'injection (5) et sont guidés vers l'une des deuxièmes surfaces latérales (11), sur laquelle les fils de contact (31) sont connectés à des câbles (12),
dans lequel la au moins une rangée de transducteurs ultrasonores (13) est fixée par introduction et durcissement d'une couche de la suspension, dans lequel la couche forme la surface d'injection (5).

12. Procédé selon la revendication 11, **caractérisé en ce que** le procédé comprend en outre l'étape suivante :
e) la formation de la surface de couvercle (7) par une couche d'une suspension, notamment d'une suspension contenant de l'oxyde de tungstène, qui est introduite et durcie, dans lequel les fils de contact (31) sont fixés mécaniquement.

13. Procédé selon l'une quelconque des revendications 11 ou 12, **caractérisé en ce que** la ou les couches de la suspension, notamment de la suspension contenant de l'oxyde de tungstène, est ou sont introduites à l'état liquide et sont durcies par un traitement thermique à 35 °C jusqu'à 45 °C pendant 3,5 heures jusqu'à 4,5 heures, notamment à environ 40 °C pendant environ 4 heures.
